# EUROPEAN PATENT SPECIFICATION

(11) **EP 0 525 897 B1**
(45) Date of publication and mention of the grant of the patent: **15.03.1995**
(21) Application number: 92202280.1
(22) Date of filing: 23.07.1992
(51) Int. Cl.: A01K 11/00, A22B 5/00

(54) **Branding iron**
Brenneisen
Fer à marquer

(30) Priority: 01.08.1991 NL 9101325
(43) Date of publication of application: 03.02.1993
(73) Proprietor: CCM BEHEER B.V., NL-5672 AD Nuenen (NL)
(72) Inventor: Jaspers, Martinus Jacobus, NL-5674 NT Nuenen (NL)
(74) Representative: Timmers, Cornelis Herman Johannes

(56) References cited:
- EP-A- 0 273 371
- EP-A- 0 398 338
- DE-A- 2 855 981
- FR-A- 353 329
- FR-A- 2 523 813
- FR-A- 2 544 254
- GB-A- 325 334
- US-A- 2 593 110
- US-A- 3 071 071
- US-A- 3 722 472

## Description

The invention relates to a device of the type mentioned in the preamble of claim 1.

Such a device is disclosed in FR-A-353.329. This known device comprises a petrol heated branding head, and the support comprises a ball fitting provided with coil springs biasing the branding head towards its neutral position.

Because of the operating circumstances of this known device, the structure of said support is susceptible to mechanical malfunctioning, due to the fact that the conctruction easily gets filthy and damaged, thereby inhibiting a universal movement of the branding head.

An important disadvantage is that, because of the relatively large distance between the branding head and the ball fitting - resulting from the fact that a petrol burner generates a relatively long flame - this branding head, when touching a curved surface of the meat or cattle to be branded, must necessarily execute a sideways movement when the branding iron continues to move in a straight line towards said meat or cattle in order to make full contact, resulting in a blurred brand. Therefore this known branding device is quite unsuitable for use in an automated branding station.

The object of the device according to the present invention is to overcome this problem, and this is achieved by the measures according to the characterising clause of claim 1.

Thus the invention provides a branding iron whose branding head conforms itself to the surface of the meat to be branded.

Another object of the invention is to provide such a device with which a controlled branded image can be made by means of a well-defined branding force and branding iron path.

For this purpose, the device according to the invention has the characteristics specified in claim 4.

A number of other advantageous embodiments of the present invention are described in the remaining subclaims.

The invention will now be explained in greater detail with reference to the drawings, in which:
Fig. 1A shows a schematic cross-section of a preferred embodiment of a branding iron according to the present invention;
Fig. 1B shows a schematic cross-section along the line A-A from Fig. 1A, which itself is in turn a cross-section along line B-B from Fig. 1A;
Fig. 2 shows an advantageous embodiment of a membrane of a branding iron according to the present invention; and
Fig. 3 shows a cross-section of an embodiment of a hand-operated branding iron according to the present invention.

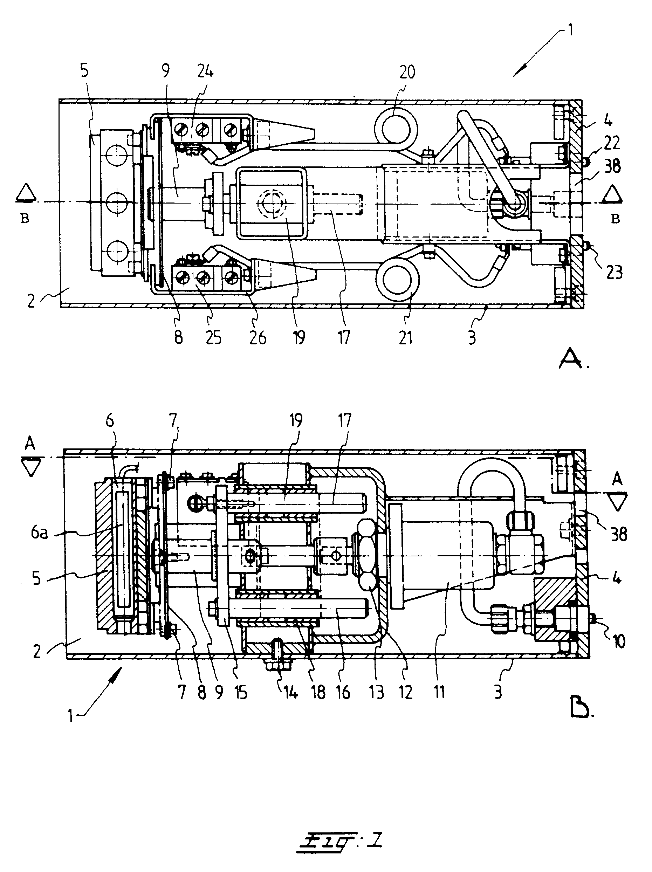

A branding iron is indicated by reference number 1 in Fig. 1. This iron 1 is fixed e.g. to a piston rod (not shown) on a branding machine which is known per se.

The branding iron 1 comprises a branding iron housing 2, which is made up of a tubular casing 3 and a bottom 4. Inside the housing 2 is the branding head 5, which can move to and fro in the lengthwise direction of the housing. The branding head 5 comprises a number of bores 6 in which heating elements 6a are accommodated. The branding head 5 is fixed to a membrane 8 by means of a number of fixing means 7, which membrane is in turn fixed to a piston assembly 9 which can be moved to and fro in the cylinder 11 under the influence of compressed air or the like fed in at 10. The cylinder 11 is fixed concentrically in the branding iron housing 2 with means 12, 13, 14 suitable for the purpose. In order to prevent rotation of the piston assembly 9, provision is made for a connecting piece 15, on both ends of which pins 16, 17 are fixed, which pins are guided by two cylinders 18, 19 connected to the means 12 and running parallel to the longitudinal axis of the branding iron housing 2, and can move to and fro therein with the movement of the piston assembly 9.

Fig. 1B shows how the heating elements 6a in the bores 6 can be supplied with current by means of current conductors 20, 21, the current conductors being connected inside the branding iron housing 2 on the one hand to the terminals 22, 23 projecting outwards through the bottom 4 of the branding iron housing, and on the other hand to the terminals 24, 25, which latter terminals are fixed on a bracket 26 connected to the branding head 5.

At 38 the bottom 4 of the branding iron housing 2 is provided with an opening to which a suction device (not shown) can be connected, on the one hand for the extraction of branding air and, on the other, for the creation of a vacuum in the branding iron housing, so that during the branding the surface to be branded is sucked slightly against the housing.

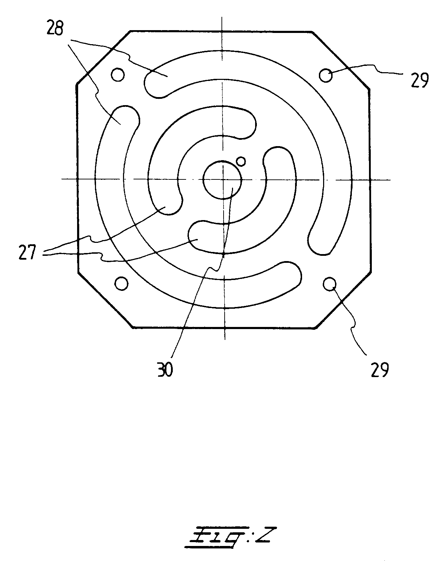

Fig. 2 shows an advantageous embodiment of the membrane 8. The membrane 8 is preferably made of stainless spring steel and has a number of recesses in the form of two pairs of concentric semi-circles 27, 28. Recesses 29, 30 are also provided, on which recesses the branding head 5 and the piston assembly 9 respectively can be fixed.

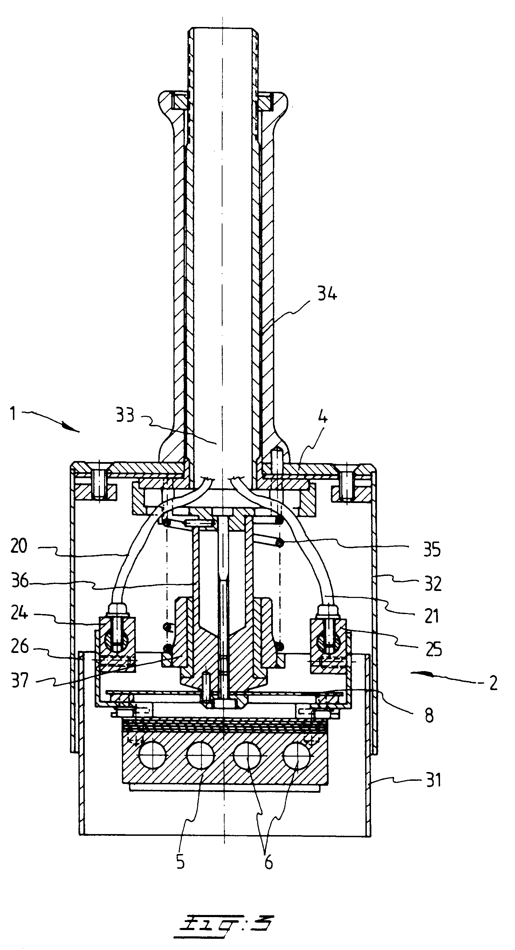

Fig. 3 shows an embodiment of a manually operated branding iron. In this figure parts which correspond to the preceding figures have the same reference numbers.

The branding iron housing 2 in this embodiment comprises two tubular parts 31, 32 which can be moved coaxially relative to each other, and a bottom 4 connected to the outer tubular part 32.

The bottom 4 of the branding iron housing 2 is provided with an opening 33 in which a hollow handle 34 is fitted. A hose can be fixed on the handle 34, which hose is connected to a suction device (neither of which is shown) for extracting branding air and creating a vacuum in the branding iron housing 2, as already described with reference to Fig. 1.

When such a branding iron is being used, the branding iron 1 is placed against the meat to be branded, and the pressure causes the inner part 31 of the branding iron housing 2 to slide into the outer part 32 in the direction of the handle 34, in the course of which in the first instance the branding head 5 does not move relative to the outer part. Here the coil spring 35, which is wound around a pin 36 connecting the bottom 4 to the membrane 8, is compressed. The sleeve 37 connected to the inner part 31 of the branding iron housing 2 consequently slides over the pin 36. The branding head will move also relative to the outer part 32 only when the inner part 31 has slid so far relative to the branding iron head 5 that it touches the meat to be branded.

With the devices according to the present invention it is possible to apply controlled markings to the meat. After the branding iron housing 1 has been placed against the meat, it is sucked slightly against the meat, following which the branding head 5 can be moved forward and, through the suspension of the membrane 8, can comform itself to the curvature of the meat at the spot; the spring force of the membrane in this case in the first instance determines the pressure force of the branding iron on the meat. The branding mark of the heated branding head is then branded into the meat in a very short time, for example 0.5 sec.

The mobility of the branding head 5 and the degree of pressure thereof against the meat to be branded are determined mainly by the selected shape and dimensions of the membrane 8.

Instead of the branding heads shown in Figures 1A, 1B and 3, which are provided with parallel bores in which the heating elements are accommodated, it can be advantageous to use a branding head in which a coil-shaped groove is disposed in the side facing away from the branding side, in which groove a heating element is accommodated.

## Claims

1. Device for branding meat or cattle, comprising a branding iron (1) with a branding head (5), the branding head being fixed to a support (8) permitting movement of the branding head in two mutually perpendicular directions,
**characterised in that**
the support comprises a flexible membrane (8) which is fixed at a single point (30) to the end of a rod (9, 36) connecting the membrane (8) with the rest of the branding iron (1), in such a way that the branding head can always make substantially full contact with the meat to be branded.

2. Device according to claim 1, **characterised in that** the membrane (8) is provided with inner and outer cut-outs (27, 28) which are in the form of two pairs of concentric semi-circles, and in that the inner and outer pair of these semi-circles (27, 28) on the membrane (8) are displaced over an angle of 90° relative to each other.

3. Device according to claim 1 or 2, **characterised in that** the membrane (8) is made of stainless spring steel.

4. Device according to one of the preceding claims, **characterised by** a branding iron housing (2), in which the branding iron can be substantially completely accommodated, and in which the branding head (5) with the support (8) can move, by means of branding iron displacement means (9, 11), substantially in the lengthwise direction relative to the branding iron housing (2) in the direction of the meat or cattle to be branded, whereby an accurately defined branding path and branding force are obtained, by means of which controlled branding impressions can be produced.

5. Device according to claim 4, **characterised in that** the branding iron displacement means comprise a cylinder-piston assembly (9, 11), the piston being driven hydraulically or pneumattically.

6. Device according to claim 4 or 5, **characterised in that** the branding iron housing (2) is connected to a source of vacuum.

7. Device according to one of claims 4 - 6, **characterised in that** the housing (2) is formed by a tubular element.

8. Device according to one of claims 4 - 6, **characterised in that** the housing (2) is formed by two tubular parts (31, 32) which can be moved coaxially relative to each other.

9. Device according to one of the preceding claims, **characterised in that** the branding iron (1) is provided with a handle (34) for applying the brand marks manually.

## Patentansprüche

1. Vorrichtung zum Brennen von Fleisch oder Vieh, die ein Brenneisen (1) mit einem Brennkopf (5) aufweist, wobei der Brennkopf an einem Träger (8) befestigt ist, der eine Bewegung des Brennkopfes (5) in zwei wechselseitig senkrechten Richtungen ermöglicht, dadurch gekennzeichnet, daß der Träger eine flexible Membrane (8) aufweist, die an einem einzigen Punkt (30) am Ende einer Stange (9, 36) befestigt ist, die die Membrane (8) mit dem übrigen Teil des Brenneisens (1) in einer solchen Weise verbindet, daß der Brennkopf immer im wesentlichen vollen Kontakt mit dem zu brennenden Fleisch hat.

2. Vorrichtung nach Anspruch 1, dadurch gekennzeichnet, daß die Membrane (8) mit inneren und äußeren Ausschnitten (27, 28) versehen ist, die als zwei Paare konzentrischer Halbkreise ausgebildet sind, wobei das innere und äußere Paar dieser Halbkreise (26, 28) in der Membrane über einen Winkel von 90° gegeneinander versetzt sind.

3. Vorrichtung nach Anspruch 1 oder 2, dadurch gekennzeichnet, daß die Membrane (8) aus rostfreiem Federstahl gefertigt ist.

4. Vorrichtung nach einem der vorhergehenden Ansprüche, gekennzeichnet durch ein Brenneisengehäuse (2), in welchem das Brenneisen im wesentlichen vollständig untergebracht ist und in welchem der Brennkopf (5) mit dem Träger (8) sich mittels Brenneisenverschiebeeinrichtungen (9, 11) im wesentlichen in Längsrichtung des Gehäuses relativ zu dem Brenneisengehäuse (2) in Richtung auf das zu brennende Fleisch oder Vieh verschieben kann, wodurch ein genau definierter Brennweg und eine genau definierte Brennkraft erzielt werden, wodurch kontrollierte Brenneindrücke hergestellt werden können.

5. Vorrichtung nach Anspruch 4, dadurch gekennzeichnet, daß die Brenneisenverschiebeeinrichtungen eine Kolbenzylinderanordnung (9, 11) umfassen, wobei der Kolben hydraulisch oder pneumatisch angetrieben wird.

6. Vorrichtung nach Anspruch 4 oder 5, dadurch gekennzeichnet, daß das Brenneisengehäuse (2) an eine Vakuumquelle angeschlossen ist.

7. Vorrichtung nach einem der Ansprüche 4 bis 6, dadurch gekennzeichnet, daß das Gehäuse (2) durch ein rohrförmiges Element gebildet wird.

8. Vorrichtung nach einem der Ansprüche 4 bis 6, dadurch gekennzeichnet, daß das Gehäuse (2) durch zwei rohrförmige Teile (31, 32) gebildet wird, welche koaxial zueinander beweglich sind.

9. Vorrichtung nach einem der vorhergehenden Ansprüche, dadurch gekennzeichnet, daß das Brenneisen (1) mit einem Handgriff (34) versehen ist, um die Brandmale von Hand aufzubringen.

## Revendications

1. Dispositif pour marquer de la viande ou du bétail, comprenant un fer à marquer (1) ayant une tête d'impression (5), la tête d'impression étant fixée à un support (8) permettant un mouvement de la tête d'impression dans deux directions mutuellement perpendiculaires,
caractérisé en ce que
le support comprend une membrane souple (8) qui est fixée en un seul point (30) à l'extrémité d'une tige (9, 36) reliant la membrane (8) au reste du fer à marquer (1), de telle manière que la tête d'impression puisse toujours être en contact essentiellement total avec la viande à marquer.

2. Dispositif selon la revendication 1, caractérisé en ce que la membrane (8) est pourvue d'évidements intérieurs et extérieurs (27, 28) qui se présentent sous la forme de deux paires de demi-cercles concentriques, et en ce que la paire intérieure et la paire extérieure de ces demi-cercles (27, 28) sur la membrane (8) sont décalées l'une par rapport à l'autre d'un angle de 90°.

3. Dispositif selon la revendication 1 ou 2, caractérisé en ce que la membrane (8) est faite d'acier inoxydable pour ressorts.

4. Dispositif selon l'une quelconque des revendications précédentes, caractérisé par un carter de fer à marquer (2), dans lequel le fer à marquer peut être logé essentiellement en totalité, et dans lequel la tête d'impression (5) peut se déplacer avec le support (8), au moyen de moyens de déplacement de fer à marquer (9, 11), essentiellement dans le sens longitudinal par rapport au carter de fer à marquer (2) en direction de la viande ou du bétail à marquer, ce qui permet d'obtenir un trajet de marquage et une force de marquage définis avec précision, au moyen desquels peuvent être produites des empreintes de marquage contrôlées.

5. Dispositif selon la revendication 4, caractérisé en ce que les moyens de déplacement de fer à marquer comprennent un ensemble cylindre et piston (9, 11), le piston étant entraîné hydrauliquement ou pneumatiquement.

6. Dispositif selon la revendication 4 ou 5, caractérisé en ce que le carter de fer à marquer (2) est relié à une source de vide.

7. Dispositif selon l'une des revendications 4 à 6, caractérisé en ce que le carter (2) est formé par un élément tubulaire.

8. Dispositif selon l'une des revendications 4 à 6, caractérisé en ce que le carter (2) est formé par deux parties tubulaires (31, 32) qui peuvent être déplacées de manière coaxiale l'une par rapport à l'autre.

9. Dispositif selon l'une des revendications précédentes, caractérisé en ce que le fer à marquer (1) est pourvu d'un manche (34) pour appliquer manuellement les estampilles.
